# EUROPEAN PATENT SPECIFICATION

(11) **EP 3 501 963 B1**
(45) Date of publication and mention of the grant of the patent: **21.07.2021**
(21) Application number: 18000991.2
(22) Date of filing: 21.12.2018
(51) Int. Cl.: B62M 9/10, B62M 9/00

(54) **DOUBLE CHAINRING**
DOPPELTES KETTENBLATT
DOUBLE PLATEAU

(30) Priority: 22.12.2017 DE 102017131250
(43) Date of publication of application: 26.06.2019
(73) Proprietor: Golec, Marcin, London SW19 2RR (GB)
(72) Inventor: Golec, Marcin, London SW19 2RR (GB)
(74) Representative: Farago-Schauer, Peter Andreas

(56) References cited:
- GB-A- 641 308
- US-A1- 2009 279 984

## Description

### Technical field

The present invention is directed to a double chainring suitable for engagement to a bicycle crank spider, the double chainring comprising a small chainring having first mounting openings and a large chainring having second mounting openings, and to a method of assembling a double chainring and a bicycle crank spider including mounts with mounting openings.

### Prior art

Bicycles include chainrings to associate the pedal movement with chain and subsequent wheel movement. Chainrings have teeth on the perimeter to engage with the bicycle chain. A double chainring may be used with one larger chainring diameter offering more gear (harder to push) and with one smaller chainring offering less gear (easier to push). US2007/0049437 discloses chainrings with ramps to improved shifting between chainrings. Generally, the difference in teeth between the small and the large chainring of a double chainring is standard and 16 teeth (16t). The bicycle crank spider has standard size and generally a standard number of mounts with mounting openings of standard size and standard distance from the center of the bicycle crank spider. Chainrings need to be tightly connected to the bicycle crank spider to be able to properly transfer the forces.

The outer perimeter of the chainrings of the prior art needs to be located well outside the outer radius of the bicycle crank spider in order to allow for sufficient space for the links of the bicycle chain, so the bicycle chain can run freely over the teeth on the perimeter of the chainring without touching the perimeter of the bicycle crank spider. Also, such wide outer perimeter of the small chainring is required to be able to connect the chainring and the bicycle crank spider while allowing the smooth operation of the chain without interference of the chain links with the bicycle crank spider. Consequently, the standard size of the bicycle crank spider's outer radius limits the size of the small chainrings of the prior art. Accordingly, the cyclist cannot mount a chainring with a smaller diameter and can only use a larger chainring that only provides higher gear, presenting a disadvantage for instance when ascending steep hills.

GB 641 308 discloses a double chainring according to the preamble of claim 1. In particular, the known chainring is suitable for engagement to a bicycle crank spider, the double chainring comprising a small chainring having first mounting openings; and a large chainring having second mounting openings, wherein the first mounting openings and the second mounting openings are suitable for engagement with respective third mounting openings provided on respective mounts of the spider so as to assemble the small chainring and the large chainring to the spider; wherein each chainring has a side facing the spider and a side facing away from the spider, in an assembled state; wherein the small chainring has an axial rim at the side facing the spider containing a respective first mounting opening and suitable for engaging axially against the spider in the assembled state; and wherein the large chainring has axial recesses at the side facing the spider suitable for axially receiving the respective mounts in the assembled state.

### Summary of the invention

We have now surprisingly found that a chainring of smaller size can be tightly connected to standard bicycle crank spiders while allowing the cyclist to use a standard bicycle crank spider and standard gear equipment, yet offering the cyclist the benefits associated with the use of a lower gear.

We have surprisingly found that, among other features and benefits, inclusion of protrusions on the small chainring and recesses on the large chainring allow for axial movement of the double chainring relative to the bicycle crank spider such that chainrings of smaller diameter can be used with a standard bicycle crank spider while preventing the chain running on the smaller chainring from hitting the bicycle crank spider and while the small chainring can still tightly be connected to a bicycle crank spider.

Accordingly, the present invention is directed to the double chainring of claim 1 and dependent claims 2 to 10.

The present invention surprisingly offers the cyclist the option to use smaller chainrings and smaller chainring sets with standard-sized bicycle crank spiders and that has hitherto been impossible. Importantly, the double chainring is especially designed to allow for continued use of a standard front shifting equipment (hereafter front derailleur) which shifts the bicycle chain from one chainring to another. The chainrings of the invention can be tightly connected to the bicycle crank spider, allowing for proper transfer of the power from the bicycle crank spider to the chainring during use of the bicycle. Chainrings of the invention allow the bicycle chain to run freely, with smaller chainrings than have hitherto been used and even with chainrings of smaller diameter than the standard-sized bicycle crank spider. Favorably, the invention allows for continued use of standard bicycle equipment, for instance including the bicycle crank spider, the bicycle chain and in particular the front derailleur (gear shifting equipment). The cyclist benefits from the use of smaller chainrings of the invention by now being able to turn the pedals more quickly with less power which is particularly useful when ascending a steep hill or possibly moving through more difficult terrain, such as mud.

### Summary of the figures

The objects, advantages and novel features of the present invention will become more apparent from the following detailed description of the currently preferred embodiments thereof when taken in conjunction with the accompanying drawings, wherein
Figure 1 is a schematic representation of a double chainring of the prior art
Figures 2, 3 and 4 are schematic perspective representations of configuration of the double chainring and the bicycle crank spider.
Figure 5 is a schematic representation of a small chainring.
Figure 6, 7, 8, and 9 are schematic representations of details of a small chainring.
Figure 10 is a schematic representation of a large chainring.
Figure 11 and 12 are schematic representations of details of a large chainring.
Figure 13 is a schematic representation of a large chainring.
Figure 14 is a schematic representation of a double chainring with a small chainring, a bicycle crank spider and a large chainring.

### Detailed description of the invention

For the purpose of this invention, the side of a chainring facing the bicycle crank spider is referred to as "side facing spider" and the side facing away from the bicycle crank spider is called "side facing away from spider". Specifically for the present invention, each chainring has a side facing the spider and a side facing away from the spider in an assembled state of the double chainring to the bicycle crank spider.

For the purpose of this invention, the "bicycle crank spider" is also referred to as "spider" or "crank spider". The spider in mounted in a conational manner to the bicycle.

Furthermore, the reference to a "standard" spider is intended as to one having a given size and shape depending on the specification of a crank manufacturer. Accordingly the size and shape of a "standard" spider may vary. Nevertheless, the invention allows a crank spider originally mounted on or manufactured for a bicycle to be used with a great variety of chainrings, in particular small chainrings, having smaller sizes than those intended for working with the originally mounted or manufactured spider.

In this application, reference is made to the standard configuration of a double chainring on the bicycle which means that the small chainring is located towards the inside of the bicycle, closer to the bicycle frame, while the large chainring is located towards the outside of the bicycle, away from the frame.

### Chainrings

The present invention is directed to a double chainring and to a method of connecting a double chainring with a spider of the bicycle crank arm. Such spider and chainrings are used in bicycles. Multiple chainrings, including double chainring combinations are well-known in the art. Chainrings are generally flat. The chainrings have mounting openings. They have a circular, oval or non-round shape. The chainrings have teeth on the perimeter. Typically, the difference between the small and the large chainring of the double chainring is 16 teeth (16t). The teeth connect with a bicycle chain which can change (shift) between the two chainrings with the use of a front derailleur. The front derailleur generally has standard settings and requires a specific distance between the chainrings and between the teeth of different chainrings to ensure proper transfer of the chain from one to the other chainring, and back. The chainrings are tightly connected to a spider in order to transfer the torque from a pedal via a crank arm to the chainring and subsequently the chain and towards the bicycle wheels.

Double chainrings generally comprises two chainrings of different diameter, one of small diameter and one of large diameter. The small and the large chainring are connected to opposite sides of a spider. Typically, the small chainring is connected on the inside of the spider (i.e. towards the frame of the bicycle) and the large on the outside of the spider (i.e. away from the frame of the bicycle). The mounting openings in the chainrings and spider are used to obtain a tight connection.

### Small chainring

According to the invention, the small chainring has an even number of teeth on the perimeter. The number of teeth is preferably selected from 28, 30, 32, 34, 36, 38 and 40 more preferably from 28, 30, 32, and most preferably from 30 and 32. The small chainring has mounting openings through the face of the chainring, hereafter called "first mounting openings". Preferably, the small chainring comprises 4 or 5, more preferably 4 first mounting openings. Preferably, the first mounting openings have a respective internal thread.

The small chainring has axial protrusions on the side facing the spider. The protrusions are preferably located around the respective first mounting openings. The protrusions may be continuous, for instance a ring along the surface of the small chainring. However, the protrusions are preferably discrete. Preferably, the protrusions have a width that has a ratio compared to the diameter of the mounting opening of around 1,2 to 4. The protrusions preferably have a length corresponding to at least half the (sideways) thickness of a bicycle chain, preferably between 0,5 mm and 10 mm. The protrusions preferably have a curved perimeter, preferably a semicircle, on the side facing the center of the small chainring.

At least one of the axial protrusions has a respective axial projection extending from the axial protrusion on the side facing the spider and around the respective first mounting opening. Preferably, the projections have a radial cross section smaller than the protrusion. Preferably, the axial projections have a respective curved perimeter, preferably a semicircle, on the side facing the center of the small chainring.

In a preferred embodiment, the small chainring comprises four axial protrusions with four respective axial projections located around the respective first mounting openings.

### Large chainring

According to the invention, the large chainring has an even number of teeth on the perimeter. The number of teeth is preferably selected from 44, 46, 48, 50, 52, 54 and 56 more preferably from 44, 46, 48, and most preferably from 46 and 48. The large chainring has mounting openings through the face of the chainring, hereafter called "second mounting openings". Preferably, the large chainring comprises 4 or 5, more preferably 4 second mounting openings.

The large chainring has axial recesses on the side facing the spider. Preferably, the large axial recesses are located around the respective second mounting openings. Preferably, the large chainring comprises four axial recesses located around the respective second mounting openings.

Preferably, at least one of the axial recesses has a respective axial extension extending from the axial recess on the side facing the spider and, preferably, the axial extension extends around the respective second mounting opening. Preferably, the axial extensions have a respective curve, preferably a semicircle, perimeter on the side facing the center of the large chainring.

Preferably, the second mounting opening is reduced in its diameter when the axial extension is present on the axial recess as compared to the second mounting opening without the axial extension at the axial recess.

In a preferred embodiment, the large chainring has two axial extensions located at diametrically opposed ends of the large chainring. Preferably, the large bicycle chainring comprising four axial recesses located around four respective mounting openings on the chainring side facing the spider, and wherein the two recesses at diametrically opposed ends have mounting openings of smaller diameter and have an axial extension located around the mounting openings and the two axial extensions have a curved perimeter, preferably a semicircle, surface facing the center of the chainring.

### Spider

According to a preferred embodiment of the invention, a standard spider is used. The spider may be separate or may be integral part of a crank arm.

According to the invention, the spider has multiple mounting openings, hereafter called "third mounting openings".

The spider preferably has three to seven, more preferably four or five, most preferably four third mounting openings. The number of the first and second mounting openings on the small and large chainrings, respectively, preferably follows the number of the third openings of the bicycle crank spider.

### Small chainring, spider and large chainring

Preferably, the chainrings are connected to opposite sides of a spider. The larger chainring is placed on the outside of the spider (away from the bicycle frame), the small chainring on the inside (towards the bicycle frame).

The first mounting openings and the second mounting openings engage with the respective third mounting openings provided on respective mounts of the spider. The respective mounting openings could be connected by means of nuts and bolts, but according to a preferred embodiment of the invention, the chainrings and the spider are preferably connected to each other using the respective mounting openings and bolts. Preferably, the small chainring has an internal thread in the first mounting opening that tightly connects with the external thread of the bolt. Preferably, the bolt is inserted through the second mounting opening of the large chainring, then through the third mounting opening of the spider and then tightened in the internal thread of the first mounting opening in the small chainring. This is preferred in that the connection of the chainrings and the spider is snug, benefitting torque transfer.

The axial protrusions axially engage against the spider in the assembled state. Specifically, it is preferred that the axial protrusions axially engage against the surface of the respective mounts surrounding the respective third mounting openings in the assembled state. Preferably, the projections have a smaller cross sectional surface than the protrusions which allows the protrusions to axially engage against the spider while the projections are axially inserted into the respective third mounting openings.

The axial projection is axially inserted into the respective third mounting opening and engages with the inner surface of the respective third mounting opening in the assembled state. Preferably, the projections have a curved perimeter, preferably a semicircle, on the side facing the center of the small chainring, allowing for a snug fit into the third mounting openings. Use of the axial projection with the preferred features leads to a tight connection between the spider and the small chainring, benefiting the torque transfer from one to the other and contributing to the bicycle movement.

The axial recesses of the large chainring axially receive the respective mounts of the spider in the assembled state. Specifically, it is preferred that the axial recesses axially receive the surface of the respective mount surrounding the respective third mounting openings in the assembled state. Preferably, the recesses have a depth that corresponds with the length of the axial protrusions of the small chainring. This beneficially moves both the small and large chainrings axially over the same distance, not affecting their position vis-à-vis each other and, for instance, allowing for continued use of the standard derailleur.
Preferably, the axial extension is axially inserted into the respective third mounting opening and, preferably, engaged with the inner surface of the respective third mounting opening in the assembled state. Preferably, the axial extensions have a respective curved perimeter, preferably a semicircle, on the side facing the center of the large chainring allowing this extension to fit snugly into the third mounting opening. The use of the preferred axial extension leads to a tight connection between the spider and the large chainring, benefiting the torque transfer from one to the other and indeed contributing to the speed.

Preferably, the axial projections extend from the surface of the protrusion with a distance of about half of the thickness of the third mounting opening. Preferably, the axial extension also extends from the surface of the recess with a distance of about half of the thickness of the third mounting opening. These distances allow for insertion of both the axial projection and the axial extension into the third mounting opening from the opposite direction, further benefiting the tight connection between the chainrings and the spider.

Preferably, a bolt connects the large chainring to the spider and to the small chainring in the assembled state. Preferably, the first mounting opening of the small chainring has an internal thread to receive the external thread of the bolt.

According to one particular embodiment of the invention, at least one bolt preferably includes:
- a portion with a wider diameter extending against the inner surface of the respective second mounting opening and the inner surface of the respective third mounting opening, and
- a portion with a narrower diameter extending against the inner surface of the respective first mounting opening.

Preferably, the portion with the narrower diameter has an external thread that matches an internal thread on the inner surface of the first mounting opening of the small chainring. This bolt is of particular benefit for the second mounting opening when the recess of the large chainring does not have the axial extension. Preferably, in this case, the second mounting opening has a larger diameter in comparison with the mounting opening in a recess with an axial extension. This particular bolt contributes to a tight overall connection between the chainrings and the spider.

In a particularly preferred embodiment, the double chainring according to the present invention comprises a small chainring with four axial protrusions with four respective axial projections located around the respective first mounting openings and the large chainring comprises four axial recesses located around the respective second mounting openings, wherein two of the axial recesses are located at diametrically opposed ends of the large chainring and comprise a respective axial extension, and wherein the small chainring is oval in shape with the first mounting openings on the smaller oval diameter being smaller in diameter than the first mounting openings on the larger oval diameter.

In this embodiment, the other two of the axial recesses (that are at also diametrically opposed ends of the large chainring) preferably have larger diameters and do not have an axial extension and use a bolt with a narrower portion and a wider portion, as above described.

In a further embodiment, the invention is directed to a method of assembling the double chainring and the spider including mounts with respective third mounting openings by placing the small chainring against the spider, by axially engaging the axial protrusions against the surface of the respective mounts surrounding the respective third mounting openings, by placing the large chainring against the spider such that the recesses axially receive the surface of the respective mounts surrounding the respective third mounting openings, and by connecting the small chainring, the spider and the large chainring through the respective first, second and third mounting openings.

According to a preferred embodiment of the invention, in the assembled state, the axial protrusions axially displace the tips of the teeth (9) of the small chainring (2) away from the bisection plane (C) of the mounts (5) of the spider (4), and the axial recesses displace of the tips of the teeth (10) of the large chainring (3) towards the bisection plane (C). Beneficially, both chainrings have been moved axially in the same direction over the same distance. This allows use of a smaller chainring such that the spider does not interfere with the bicycle chain which can now run freely from the spider on a smaller chainring, even when the small chainring has a diameter smaller than the spider. Such movement of the chainrings also means that the distance between their respective teeth is not affected, allowing use of smaller chainrings with a lower gear, yet continued use of a standard derailleur which had hitherto not been held for possible.

### Detailed description of the figures

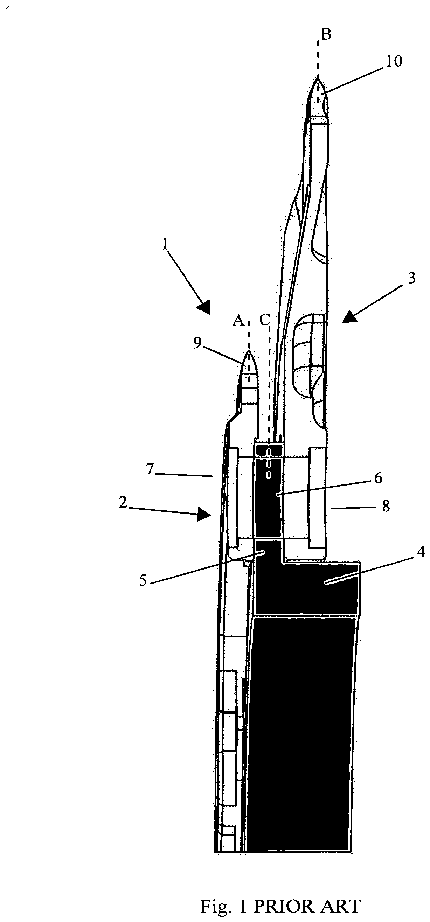

Figure 1 shows a double chainring (1) connected to a spider (4) as present in the prior art. The small chainring (2) has teeth (9) and first mounting opening (7). Spider (4) comprises mount (5) and third mounting opening (6). Large chainring (3) has teeth (10) and second mounting opening (8). The figure further shows a plane (A) passing through the teeth (9) of the small chainring (2), a plane (C) bisecting the mounts (5) of the spider (4) along a direction which is perpendicular to the axis of the spider (4) (also called bisection plane), and plane (B) passing through the teeth (10) of the large chainring (3).

The bicycle chain needs to run freely over the small chainring (2) without hitting the bicycle spider (4). This means that the size (diameter) of the small chainring (2) of the prior art has to be substantially larger compared to the size (diameter) of the standard-sized bicycle spider, and can certainly not be of same or smaller size (diameter), limiting the gearing options in the prior art.

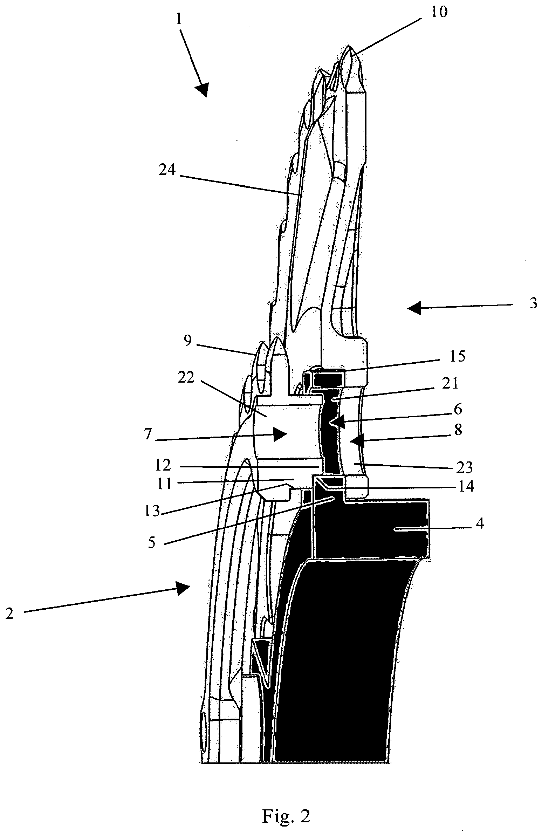

Figure 2 shows a perspective of the double chainring (1) according to the invention. The double chainring (1) engages to bicycle spider (4) that has mount (5) and third mounting openings (6) within inner surface (21).

The small chainring (2) has teeth (9) and first mounting openings (7) with inner surface (22). Axial protrusion (11) with perimeter (13) is located on the side of the small chainring (2) facing the spider and is located around the respective first mounting openings (7). Axial projection (12) with respective perimeter (14) extends from the axial protrusions (11).

The large chainring (3) has teeth (10) and second mounting openings (8) with inner surface (23). Recess (15) is located on large chainring (3) on the side facing spider (4) and around respective second mounting openings (8).

In assembled state, first, second and third mounting openings (7, 8, 6) are aligned. Protrusion (11) engages against the surface of the mount (5) of spider (4) around third mounting openings (6), extending the tip of the teeth (9) of small chainring (2) away from the bisection plane (C) (shown in figure 1, but not shown in figure 2 as the spider with the mounts remains unchanged as compared to the prior art). The diameter of small chainring (2) has been reduced in size (diameter) and teeth (9) are brought downwards, towards the center of the chainring. Protrusion (11) extends the small chainring (2) away from spider (4). As a consequence, a bicycle chain (not shown) cannot hit the spider (4) and can run freely, in lower gear.

Recess (15) allows large chainring (3) to move sideways. Figure 2 shows an embodiment in which the large chainring (3) partially covers spider (4). The tip of the teeth (10) of large chainring (3) moves sideways in the same direction and preferably over the same distance as tip of the teeth (9) of small chainring (2) has been moved by protrusion (11). Even though the respective tip of the teeth have moved, the distance between teeth (10) and teeth (9) remains as before, allowing continued use of standard gear equipment (derailleur), but now offering the option to use smaller gear with small chainring (2) of smaller diameter.

Although the recess (15) is shown in the depicted embodiments as having walls parallel to the axis of the large chainring (3), it is conceivable to implement the recess (15) by means of walls which are inclined, at least along a certain peripheral extension of the large chainring (3), with respect to the axis of the large chainring (3).

Advantageously, as shown in figure 2, the side of the large chainring (3) facing the small chain ring (2) is inclined with respect to the plane (B) of the large chainring (3) so as to provide for a slide surface (24) along which a chain (not shown) may slide between the teeth (10) of the large chainring (3) and the teeth (9) of the small chainring (2). In this way the shift of the chain from one chainring to another is further facilitated.

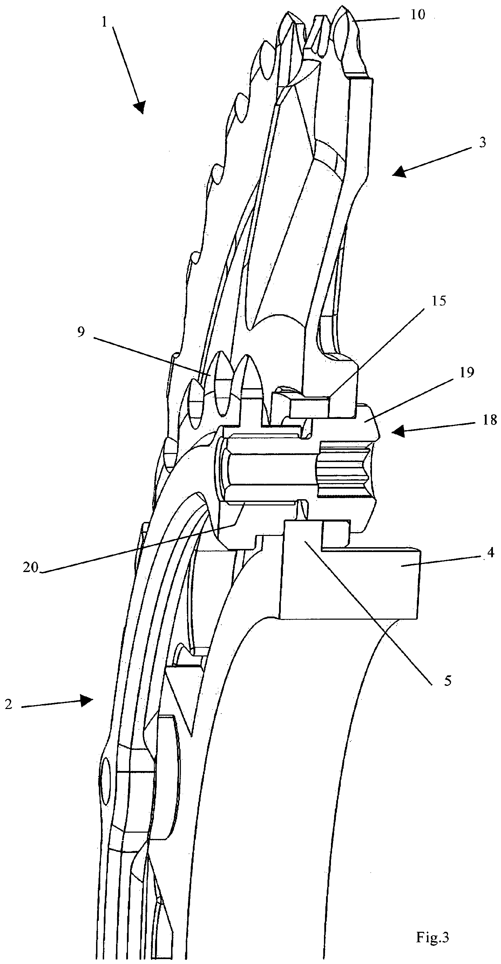

Figure 3 shows the embodiment of figure 2 with the wider portion (19) of bolt (18) inserted through the second mounting opening (8) and the third mounting opening (6) and the narrower portion of bolt (18) in first mounting opening (7). The narrower portion of bolt (18) preferably has an external thread (not shown) that engages with an internal thread (20) on the inner surface (22) of first mounting opening (7) of small chainring (2).

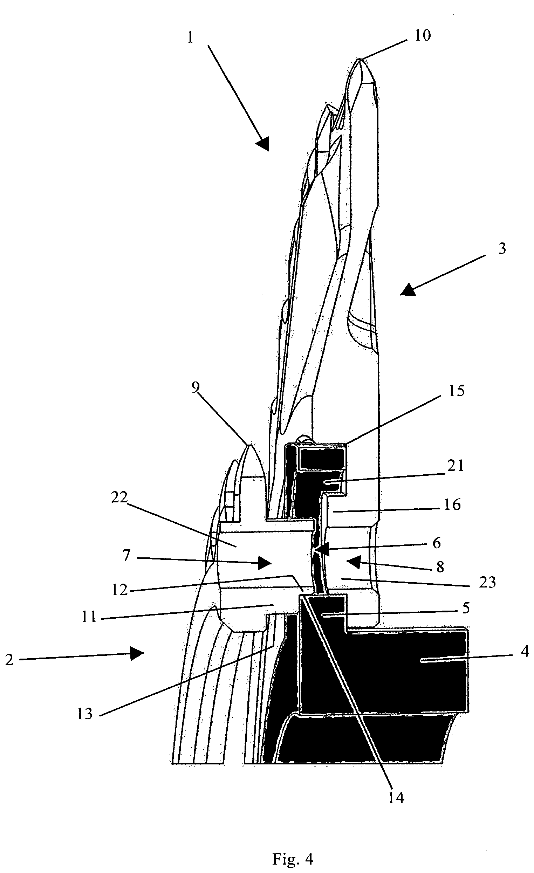

Figure 4 shows an embodiment that is distinct from the embodiment to figures 2 and 3 with small chainring (2) of even smaller diameter. Also, first mounting opening (7) has a diameter that is about half of the diameter of third mounting opening (6). Large chainring (3) is further provided with recess (15) as in the previous embodiment. As contrasting to the previous embodiment, the axial extension (16) is located in the recess (15) and around a respective second mounting opening (8). First, second and third mounting openings are aligned and axial projection (12) and axial extension (16) ensure snug engagement of the double chainring (1) with spider (4) and a bolt (not shown) which is suitable to be inserted through the mounting openings (6), (7) and (8). This embodiment shows that small chainring (2) can be further reduced in size, yet tightly connected, offering still lower gear as was possible before while using standard gear equipment.

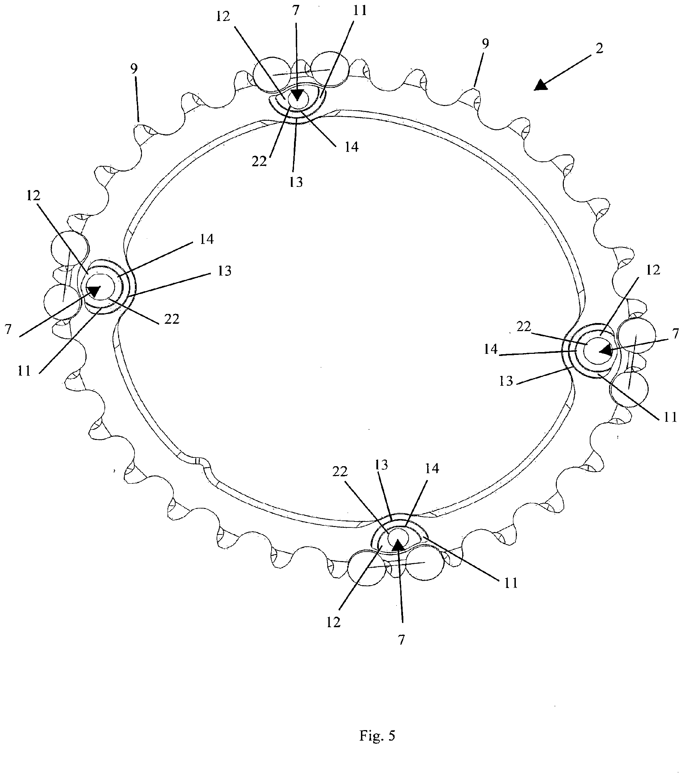

Figure 5 shows small chainring (2) with teeth (9), first mounting openings (7) with inner surface (22) surrounded by axial protrusion (11) and axial projection (12) with respective perimeters (13, 14) on the side facing the center of small chainring (2). Due to the oval shape of small chainring (2), mounting openings (7) at the top and bottom are made of smaller diameter. The oval shape allows for sufficient space for mounting openings (7) on the right and left to be of larger diameter.

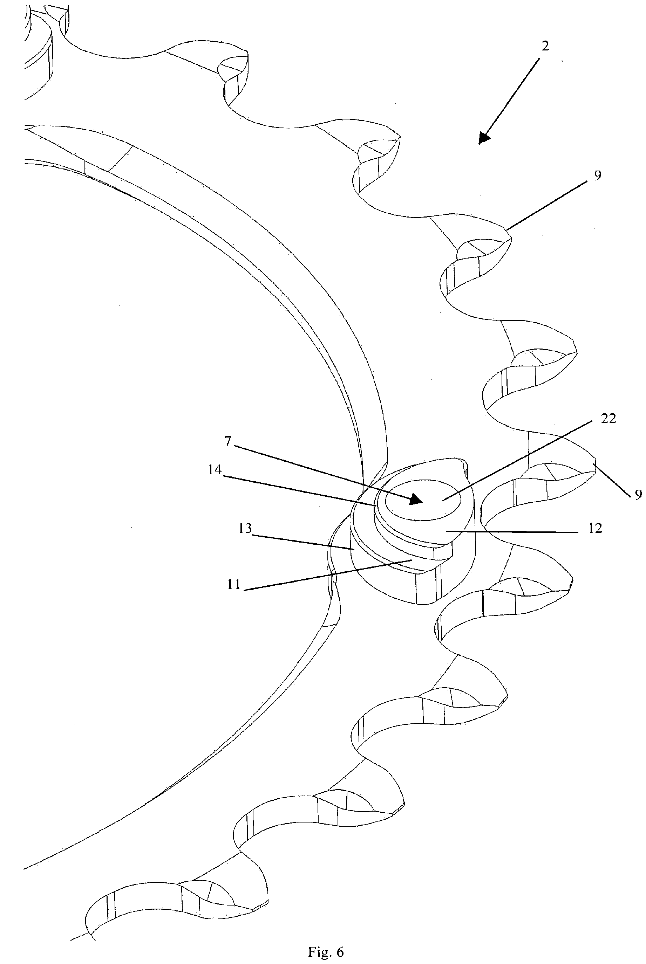

Figure 6 shows small chainring (2) in more detail and specifically mounting opening (7) with the smaller diameter of figure 5. The small chainring (2) has teeth (9), first mounting openings (7) with inner surface (22) surrounded by axial protrusion (11) and axial projection (12) with respective perimeters (13, 14) on the side facing the center of small chainring (2).

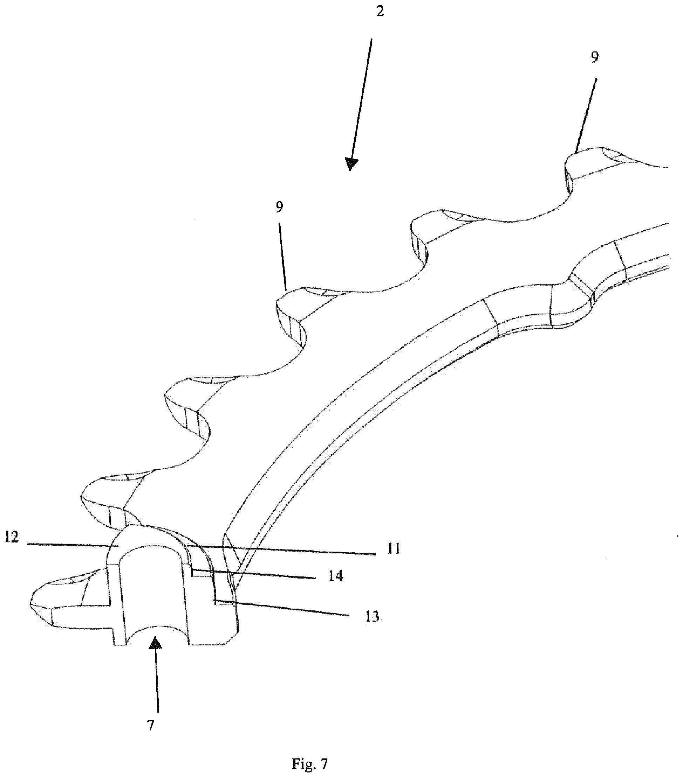

Figure 7 shows a cross section of small chainring (2) of figure 6.

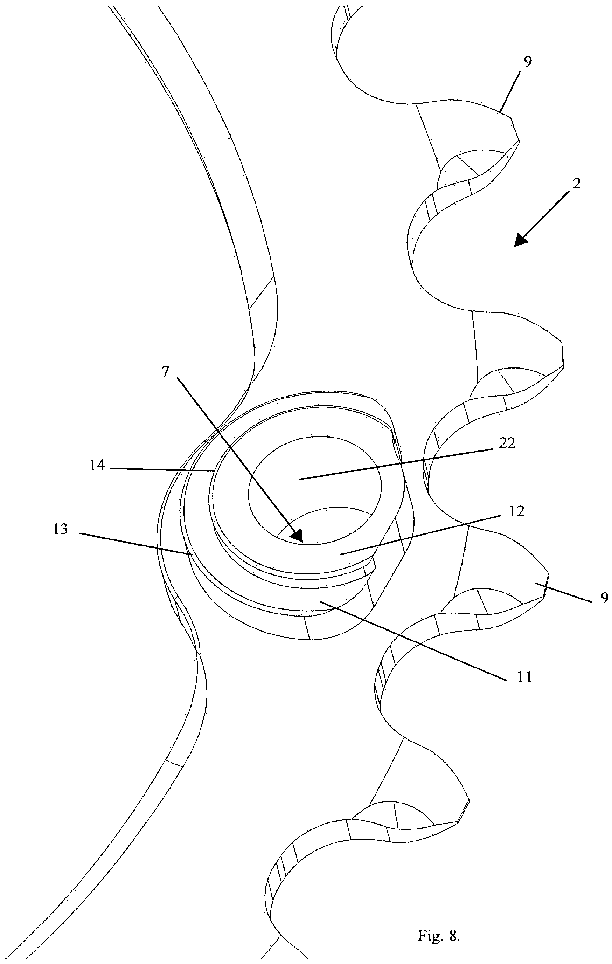

Figure 8 shows small chainring (2) in more detail and specifically mounting opening (7) with the larger diameter of figure 5. Small chainring (2) has teeth (9), first mounting openings (7) surrounded by axial protrusion (11) and axial projection (12) with respective perimeters (13, 14) on the side facing the center of small chainring.

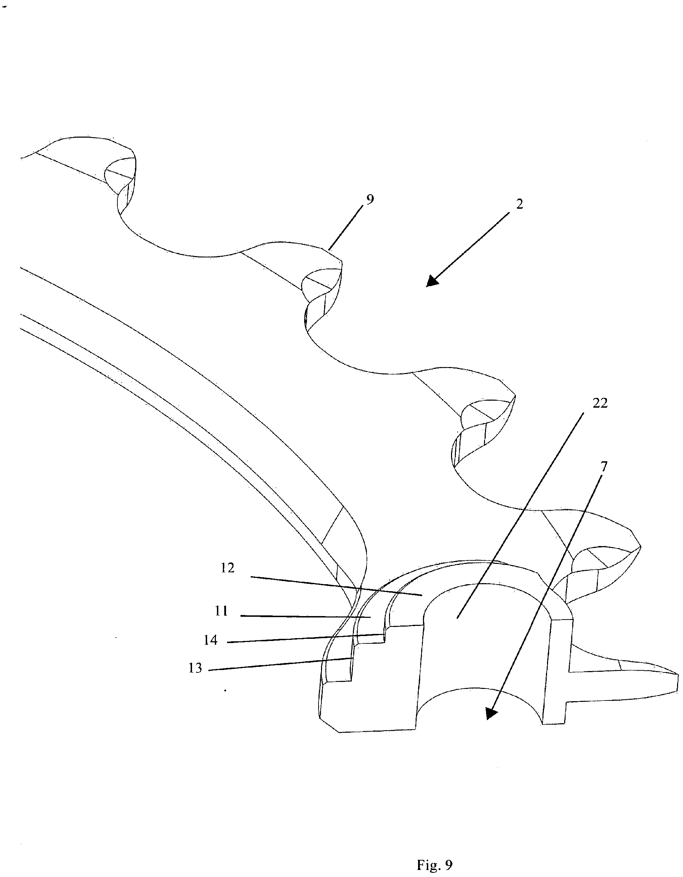

Figure 9 shows a cross section of small chainring (2) of figure 8.

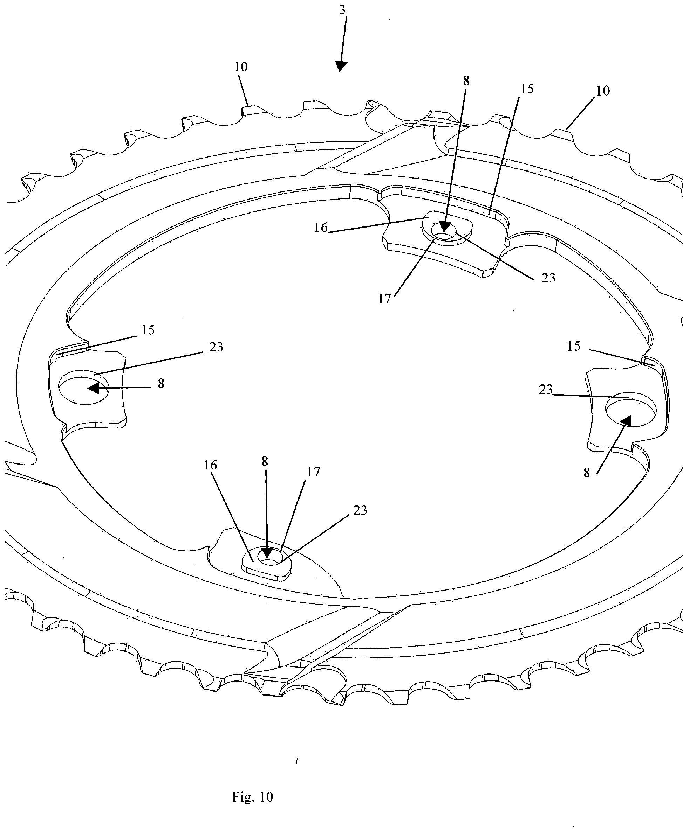

Figure 10 shows large chainring (3) with teeth (10), second mounting openings (8) with inner surface (23) with recess (15) and axial extension (16) with perimeter (17) on the side facing the center of large chainring (3).

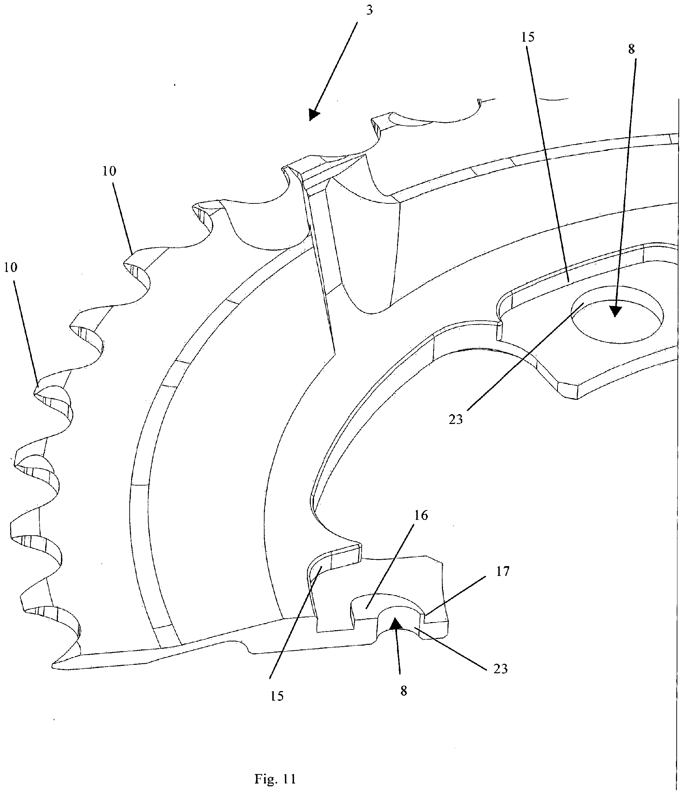

Figure 11 shows large chainring (3) in more details with teeth (10) with a cross section of second mounting opening (8) with inner surface (23) and with recess (15) and axial extension (16) that has perimeter (17) facing the center of large chainring (3). Also shown is mount opening (8) of larger diameter with recess but without axial extension (16).

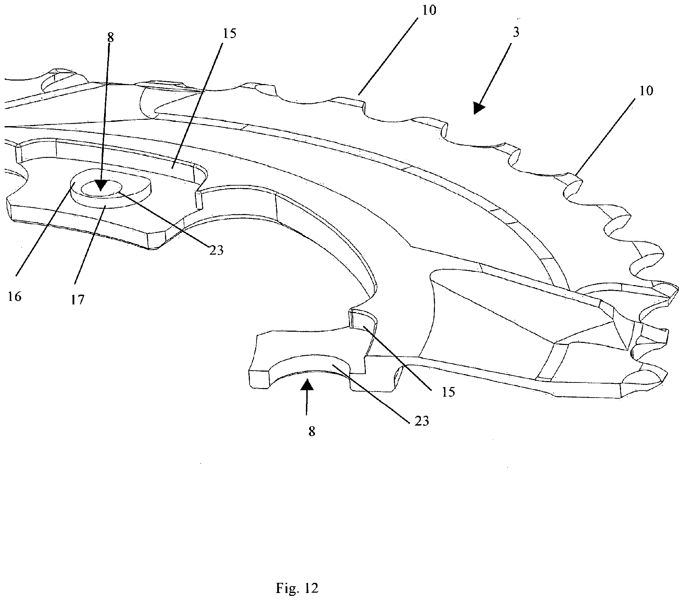

Figure 12 shows large chainring (3) in more details with teeth (10) with a cross section of second mounting opening (8) with inner surface (23) and with recess (15) but without axial extension (16). Also shown is mount opening (8) of smaller diameter with recess (15) and axial extension (16) that has perimeter (17) facing the center of large chainring (3).

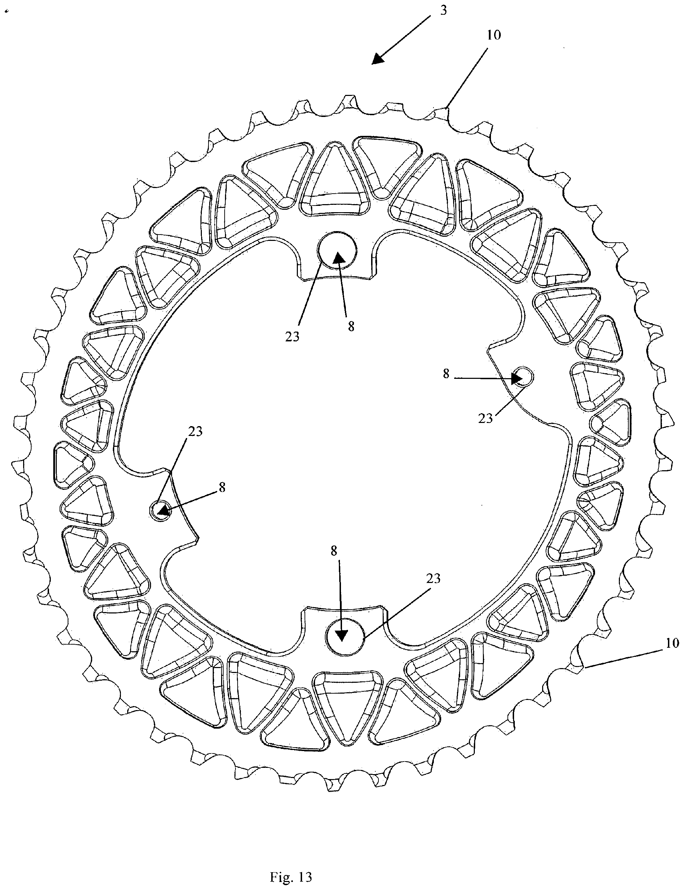

Figure 13 shows large chainring (3) from the side facing away from spider (4) with teeth (10) and second mounting openings (8) with inner surface (23).

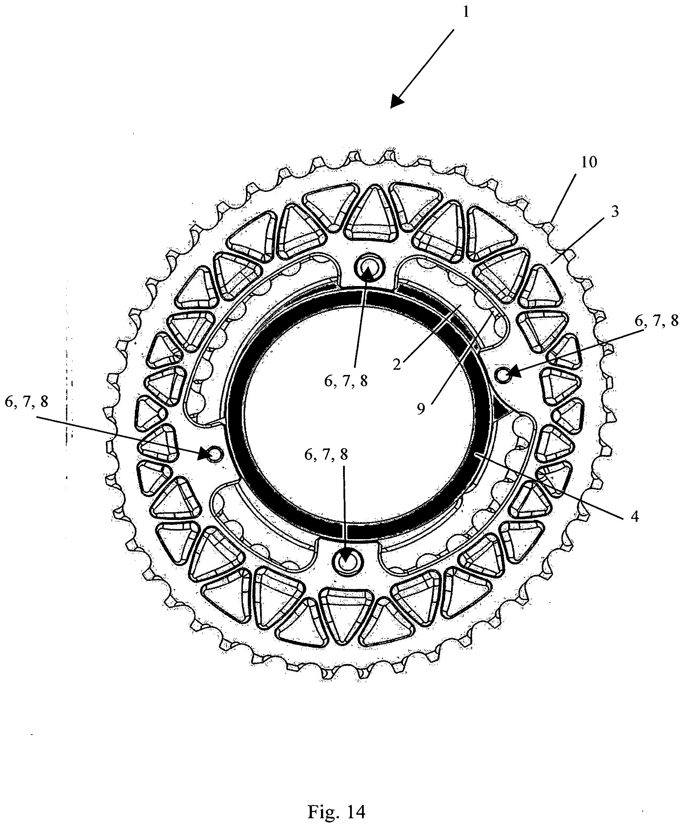

Figure 14 shows double chainring (1) of the invention with small chainring (2), spider (4) and large chainring (3) with respective mounting openings (7, 6, 8) of small as well as of large diameter. Small chainring (2) has teeth (9) and large chainring (3) has teeth (10). Small chainring (2) has oval shape.

### List or reference numbers

1. double chainring
2. small chainring
3. large chainring
4. bicycle crank spider
5. mount of bicycle crank spider
6. third mounting opening (of the bicycle crank spider)
7. first mounting opening (of the small chainring)
8. second mounting opening (of the large chainring).
9. teeth of small chainring
10. teeth of large chainring
11. protrusion of small chainring
12. projection of small chainring
13. protrusion perimeter on the side facing the center of small chainring
14. projection perimeter on the side facing the center of small chainring
15. recess of large chainring
16. axial extension of large chainring
17. extension perimeter on the side facing the center of large chainring
18. bolt
19. wider portion of the bolt
20. inner thread
21. inner surface of the mounting opening of bicycle crank spider
22. inner surface of the mounting opening of small chainring
23. inner surface of the mounting opening of large chainring
24. slide surface of the large chainring
A. plane of the small chainring
B. plane of the large chainring
C. plane of the mount bicycle crank spider

## Claims

1. Double chainring (1) suitable for engagement to a bicycle crank spider (4), the double chainring (1) comprising:
a small chainring (2) having first mounting openings (7); and
a large chainring (3) having second mounting openings (8),
wherein the first mounting openings (7) and the second mounting openings (8) are suitable for engagement with respective third mounting openings (6) provided on respective mounts (5) of the spider (4) so as to assemble the small chainring (2) and the large chainring (3) to the spider (4);
wherein each chainring (2, 3) has a side facing the spider (4) and a side facing away from the spider (4), in an assembled state;
wherein the small chainring (2) has axial protrusions (11) at the side facing the spider (4) suitable for engaging axially against the spider (4) in the assembled state; and
wherein the large chainring (3) has axial recesses (15) at the side facing the spider (4) suitable for axially receiving the respective mounts (5) in the assembled state,
**characterized in that**
at least one of the axial protrusions (11) has a respective axial projection (12) extending from the axial protrusion (11) at the side facing the spider (4) and around the respective first mounting opening (7), wherein the axial projection (12) is suitable for axial insertion into the respective third mounting opening (6) and for engaging with an inner surface (21) of the respective third mounting opening (6) in the assembled state.

2. Double chainring (1) according to claim 1, wherein, in the assembled state, the axial protrusions (11) are suitable for axially displacing the top of teeth (9) of the small chainring (2) away from a bisection plane (C) of the mounts (5) of the spider (4) and wherein the axial recesses (15) are suitable for axially displacing teeth (10) of the large chainring (3) towards the bisection plane (C) of the mounts (5) of the spider (4).

3. Double chainring (1) according to claims 1 or 2, wherein the axial protrusions (11) are located around the respective first mounting openings (7) and wherein the axial protrusions (11) are suitable for axially engaging against the surface of the respective mounts (5) surrounding the respective third mounting openings (6) in the assembled state.

4. Double chainring (1) according to one or more of the preceding claims, wherein the axial recesses (15) are located around the respective second mounting openings (8) and wherein the axial recesses (15) are suitable for axially receiving the surface of the respective mounts (5) surrounding the respective third mounting openings (6) in the assembled state.

5. Double chainring (1) according to one or more of the preceding claims, wherein at least one of the axial recesses (15) has a respective axial extension (16) extending from the axial recess (15) at the side facing the spider (4) and around the respective second mounting opening (8), wherein the axial extension (16) is suitable for axial insertion into the respective third mounting opening (6) and for engaging with the inner surface (21) of the respective third mounting opening (6) in the assembled state, wherein preferably the second mounting opening (8) is reduced in its diameter when the axial extension (16) is present on the axial recess (15) as compared to the second mounting opening (8) without the axial extension (16) at the axial recess (15), wherein preferably the large chainring (3) has two of said axial extensions (16) located at diametrically opposed ends of the large chainring (3) or wherein preferably the axial extensions (16) have a curved perimeter (17) on the side facing the center of the large chainring (3), wherein preferably the curved perimeter (17) defines a semi-circle.

6. Double chainring (1) according to one or more of the preceding claims, wherein at least one of the first mounting openings (7) is provided with an inner thread (20) at an inner surface (22) thereof for engagement with a threaded surface of a respective bolt (18).

7. Double chainring (1) according to claim 6, wherein the bolt (18) is suitable to connect the small chainring (2) and the large chainring (3) to the spider (4) in the assembled state, and wherein the bolt (18) includes:
a portion with a wider diameter extending against an inner surface (23) of the respective second mounting opening (8) and against the inner surface (21) of the respective third mounting opening (6), and
a threaded portion with a narrower diameter for engagement with the inner thread (20) of the inner surface (22) of the respective first mounting opening (7).

8. Double chainring (1) according to one or more of the preceding claims, wherein the small chainring (2) has an even number of teeth (9) on the perimeter, the number of teeth (9) being selected from 28, 30 and 32, and/or wherein the small chainring (2) comprises four of said axial protrusions (11) with four of said respective axial projections (12) located around the respective first mounting openings (7), and/or
wherein the large chainring (3) has an even number of teeth (10) on the perimeter, the number of teeth (10) being selected from 44, 46 and 48, and/or wherein the large chainring (3) comprises four of said axial recesses (15) located around the respective second mounting openings (8).

9. Double chainring (1) according to one or more of the preceding claims, wherein the axial protrusions (11) and the axial projections (12) have a respective curved perimeter (13, 14) on the side facing the center of the small chainring (2), wherein preferably the curved perimeter (13, 14) defines a semi-circle.

10. Double chainring (1) according to one or more of the preceding claims 1 to 4, wherein the small chainring (2) comprises four of said axial protrusions (11) with four of said respective axial projections (12) located around the respective first mounting openings (7) and wherein the large chainring (3) comprises four of said axial recesses (15) located around the respective second mounting openings (8), wherein two of the axial recesses (15) located at diametrically opposed ends of the large chainring (3) comprise a respective axial extension (16), and wherein preferably the small chainring (2) is oval in shape with the first mounting openings (7) on the smaller diameter of the oval shaped small chainring (2) being smaller in diameter than the first mounting openings (7) on the larger diameter of the oval shaped small chainring (2).

## Patentansprüche

1. Doppeltes Kettenblatt (1), geeignet für den Eingriff in einen Fahrrad-Kurbelstern (4), wobei das doppelte Kettenblatt (1) Folgendes umfasst:
ein kleines Kettenblatt (2) mit ersten Montageöffnungen (7) und
ein großes Kettenblatt (3) mit zweiten Montageöffnungen (8) ,
wobei die ersten Montageöffnungen (7) und die zweiten Montageöffnungen (8) geeignet sind für den Eingriff mit entsprechenden dritten Montageöffnungen (6), die an entsprechenden Trägern (5) des Sterns (4) angebracht sind, zur Montage des kleinen Kettenblatts (2) und des großen Kettenblatts (3) am Stern (4);
wobei jedes Kettenblatt (2, 3) im montierten Zustand eine dem Stern (4) zugewandte Seite und eine vom Stern (4) abgewandte Seite hat;
wobei das kleine Kettenblatt (2) axiale Vorsprünge (11) auf der dem Stern (4) zugewandten Seite hat, die geeignet sind, im montierten Zustand axial in den Stern (4) einzugreifen; und
wobei das große Kettenblatt (3) axiale Vertiefungen (15) auf der dem Stern (4) zugewandten Seite hat, die geeignet sind, im montierten Zustand die entsprechenden Träger (5) axial aufzunehmen;
**dadurch gekennzeichnet, dass**
mindestens einer der axialen Vorsprünge (11) eine dazugehörige axiale Nase (12) hat, die sich vom axialen Vorsprung (11) auf der dem Stern (4) zugewandten Seite und um die entsprechende erste Montageöffnung (7) herum erstreckt, wobei die axiale Nase (12) geeignet ist zum axialen Einführen in die entsprechende dritte Montageöffnung (6) und zum Eingreifen in eine Innenfläche (21) der entsprechenden dritten Montageöffnung (6) im montierten Zustand.

2. Doppeltes Kettenblatt (1) gemäß Anspruch 1, wobei im montierten Zustand die axialen Vorsprünge (11) geeignet sind, das obere Ende der Zähne (9) des kleinen Kettenblatts (2) von einer Halbierungsfläche (C) der Träger (5) des Sterns (4) axial fort zu verschieben, und wobei die axialen Vertiefungen (15) geeignet sind, Zähne (10) des großen Kettenblatts (3) axial zur Halbierungsfläche (C) der Träger (5) des Sterns (4) hin zu verschieben.

3. Doppeltes Kettenblatt (1) gemäß Anspruch 1 oder 2, wobei die axialen Vorsprünge (11) um die entsprechenden ersten Montageöffnungen (7) herum positioniert sind und wobei die axialen Vorsprünge (11) geeignet sind, im montierten Zustand axial in die Oberfläche der jeweiligen Träger (5) einzugreifen, die die entsprechenden dritten Montageöffnungen (6) umgeben.

4. Doppeltes Kettenblatt (1) gemäß einem oder mehreren der obigen Ansprüche, wobei die axialen Vertiefungen (15) um die entsprechenden zweiten Montageöffnungen (8) herum positioniert sind und wobei die axialen Vertiefungen (15) geeignet sind, die Oberfläche der entsprechenden Träger (5), die die jeweiligen dritten Montageöffnungen (6) umgeben, im montierten Zustand axial aufzunehmen.

5. Doppeltes Kettenblatt (1) gemäß einem oder mehreren der obigen Ansprüche, wobei mindestens eine der axialen Vertiefungen (15) eine entsprechende axiale Ausdehnung (16) hat, die sich von der axialen Vertiefung (15) auf der dem Stern (4) zugewandten Seite und um die entsprechende zweite Montageöffnung (8) herum erstreckt; wobei die axiale Ausdehnung (16) geeignet ist zum axialen Einführen in die entsprechende dritte Montageöffnung (6) und zum Eingriff mit der Innenfläche (21) der entsprechenden dritten Montageöffnung (6) im montierten Zustand; wobei die zweite Montageöffnung (8) im Durchmesser vorzugsweise reduziert ist, wenn die axiale Ausdehnung (16) sich an der axialen Vertiefung (15) befindet, verglichen mit der zweiten Montageöffnung (8) ohne die axiale Ausdehnung (16) an der axialen Vertiefung (15); wobei das große Kettenblatt (3) vorzugsweise zwei der axialen Ausdehnungen (16) an diametral entgegengesetzten Enden des großen Kettenblatts (3) hat oder wobei die axialen Ausdehnungen (16) vorzugsweise einen gekrümmten Umfang (17) auf der Seite haben, die der Mitte des großen Kettenblatts (3) zugewandt ist, wobei der gekrümmte Umfang (17) vorzugsweise einen Halbkreis bestimmt.

6. Doppeltes Kettenblatt (1) gemäß einem oder mehreren der obigen Ansprüche, wobei mindestens eine der ersten Montageöffnungen (7) an einer Innenfläche (22) derselben mit einem Innengewinde (20) für den Eingriff mit einer mit einem Gewinde versehenen Oberfläche eines entsprechenden Bolzens (18) versehen ist.

7. Doppeltes Kettenblatt (1) gemäß Anspruch 6, wobei der Bolzen (18) geeignet ist, das kleine Kettenblatt (2) und das große Kettenblatt (3) im montierten Zustand mit dem Stern (4) zu verbinden, und wobei der Bolzen (18) Folgendes einschließt:
einen Abschnitt mit einem größeren Durchmesser, der sich gegen eine Innenfläche (23) der entsprechenden zweiten Montageöffnung (8) und gegen die Innenfläche (21) der entsprechenden dritten Montageöffnung (6) erstreckt, und
einen Gewindeabschnitt mit einem schmaleren Durchmesser für den Eingriff mit dem Innengewinde (20) der Innenfläche (22) der entsprechenden ersten Montageöffnung (7).

8. Doppeltes Kettenblatt (1) gemäß einem oder mehreren der obigen Ansprüche, wobei das kleine Kettenblatt (2) an seinem Umfang eine gerade Zahl von Zähnen (9) hat, wobei die Anzahl der Zähne (9) gewählt ist aus 28, 30 und 32, und/oder wobei das kleine Kettenblatt (2) vier der axialen Vorsprünge (11) umfasst, wobei vier der entsprechenden axialen Nasen (12) um die jeweiligen ersten Montageöffnungen (7) herum positioniert sind; und/oder wobei das große Kettenblatt (3) an seinem Umfang eine gerade Zahl von Zähnen (10) hat, wobei die Anzahl der Zähne (10) gewählt ist aus 44, 46 und 48 und/oder wobei das große Kettenblatt (3) vier der axialen Vertiefungen (15), um die entsprechenden zweiten Montageöffnungen (8) herum positioniert, umfasst.

9. Doppeltes Kettenblatt (1) gemäß einem oder mehreren der obigen Ansprüche, wobei die axialen Vorsprünge (11) und die axialen Nasen (12) auf der Seite, die der Mitte des kleinen Kettenblatts (2) zugewandt ist, eine entsprechende gekrümmte Begrenzung (13, 14) haben, wobei die gekrümmte Begrenzung (13, 14) vorzugsweise einen Halbkreis bestimmt.

10. Doppeltes Kettenblatt (1) gemäß einem oder mehreren der obigen Ansprüche 1 bis 4, wobei das kleine Kettenblatt (2) vier der axialen Vorsprünge (11) umfasst, wobei vier der entsprechenden axialen Nasen (12) um die entsprechenden ersten Montageöffnungen (7) herum positioniert sind und wobei das große Kettenblatt (3) vier der axialen Vertiefungen (15) umfasst, die um die entsprechenden zweiten Montageöffnungen (8) herum positioniert sind, wobei zwei der axialen Vertiefungen (15), die sich an diametral entgegengesetzten Enden des großen Kettenblatts (3) befinden, eine entsprechende axiale Ausdehnung (16) umfassen und wobei das kleine Kettenblatt (2) vorzugsweise eine ovale Form hat, wobei die ersten Montageöffnungen (7) am kleineren Durchmesser des ovalen kleinen Kettenblatts (2) einen kleineren Durchmesser haben als die ersten Montageöffnungen (7) am größeren Durchmesser des ovalen kleinen Kettenblatts (2).

## Revendications

1. Plateau de pédalier double (1) approprié pour l'engagement sur une étoile de manivelle (4) de bicyclette, le plateau de pédalier double (1) comprenant:
un petit plateau de pédalier (2) ayant des premières ouvertures de montage (7); et
un grand plateau de pédalier (3) ayant des deuxièmes ouvertures de montage (8),
dans lequel les premières ouvertures de montage (7) et les deuxièmes ouvertures de montage (8) sont appropriées pour l'engagement avec des troisièmes ouvertures de montage (6) respectives prévues sur des montages (5) respectifs de l'étoile (4) de façon à assembler le petit plateau de pédalier (2) et le grand plateau de pédalier (3) à l'étoile (4);
dans lequel chaque plateau de pédalier (2, 3) présente un côté face à l'étoile (4) et un côté éloigné de l'étoile (4) dans un état assemblé;
dans lequel le petit plateau de pédalier (2) présente des saillies axiales (11) sur le côté face à l'étoile (4) adaptées pour s'engager axialement contre l'étoile (4) dans l'état assemblé; et
dans lequel le grand plateau de pédalier (3) a des creux axiaux (15) sur le côté face à l'étoile (4) adaptés pour recevoir axialement les montages (5) respectifs dans l'état assemblé,
**caractérisé en ce**
**qu'**au moins une des saillies axiales (11) présente une projection axiale (12) respective s'étendant à partir de la saillie axiale (11) sur le côté face à l'étoile (4) et autour de la première ouverture de montage (7) respective, dans lequel la projection axiale (12) est appropriée pour l'insertion axiale dans la troisième ouverture de montage (6) respective et pour l'engagement avec une surface intérieure (21) de la troisième ouverture de montage (6) respective dans l'état assemblé.

2. Plateau de pédalier double (1) selon la revendication 1, dans lequel, dans l'état assemblé, les saillies axiales (11) sont appropriées pour déplacer axialement le dessus de pignons (9) du petit plateau de pédalier (2) à distance d'un plan de bisection (C) des montages (5) de l'étoile (4) et dans lequel les creux axiaux (15) sont appropriés pour déplacer axialement des pignons (10) du grand plateau de pédalier (3) en direction du plan de bisection (C) des montages (5) de l'étoile (4).

3. Plateau de pédalier double (1) selon la revendication 1 ou 2, dans lequel les saillies axiales (11) sont situées autour de premières ouvertures de montage (7) respectives et dans lequel les saillies axiales (11) sont appropriées pour s'engager axialement contre la surface des montages (5) respectifs entourant les troisièmes ouvertures de montage (6) respectives dans l'état assemblé.

4. Plateau de pédalier double (1) selon l'une ou plusieurs des revendications précédentes, dans lequel les creux axiaux (15) sont situés autour des deuxièmes ouvertures de montage (8) respectives et dans lequel les creux axiaux (15) sont appropriés pour recevoir axialement la surface des montages respectifs (5) entourant les troisièmes ouvertures de montage (6) respectives dans l'état assemblé.

5. Plateau de pédalier double (1) selon l'une ou plusieurs des revendications précédentes, dans lequel au moins un des creux axiaux (15) présente une extension axiale (16) respective s'étendant à partir du creux axial (15) sur le côté face à l'étoile (4) et autour de la deuxième ouverture de montage (8) respective, dans lequel l'extension axiale (16) est appropriée pour l'insertion axiale dans la troisième ouverture de montage (6) respective et pour l'engagement avec la surface intérieure (21) de la troisième ouverture de montage (6) respective dans l'état assemblé, dans lequel de préférence, la deuxième ouverture de montage (8) est réduite dans son diamètre lorsque l'extension axiale (16) est présente sur le creux axial (15) comparé à la deuxième ouverture de montage (8) sans l'extension axiale (16) sur le creux axial (15), dans lequel de préférence le grand plateau de pédalier (3) présente deux desdites extensions axiales (16) situées à des extrémités diamétralement opposées du grand plateau de pédalier (3) ou dans lequel de préférence les extensions axiales (16) ont un périmètre incurvé (17) sur le côté face au centre du grand plateau de pédalier (3), dans lequel de préférence le périmètre incurvé (17) définit un demi-cercle.

6. Plateau de pédalier double (1) selon l'une ou plusieurs des revendications précédentes, dans lequel au moins une des premières ouvertures de montage (7) est dotée d'un filetage intérieur (20) sur une surface intérieure (22) de celle-ci pour l'engagement avec une surface filetée d'un boulon (18) respectif.

7. Plateau de pédalier double (1) selon la revendication 6, dans lequel le boulon (18) est adapté pour relier le petit plateau de pédalier (2) et le grand plateau de pédalier (3) à l'étoile (4) dans l'état assemblé, et dans lequel le boulon (18) inclut:
une partie avec un diamètre plus grand s'étendant contre une surface intérieure (23) de la deuxième ouverture de montage (8) respective et contre la surface intérieure (21) de la troisième ouverture de montage (6) respective, et
une partie filetée avec un diamètre plus étroit pour l'engagement avec le filetage intérieur (20) de la surface intérieure (22) de la première ouverture de montage (7) respective.

8. Plateau de pédalier double (1) selon l'une ou plusieurs des revendications précédentes, dans lequel le petit plateau de pédalier (2) présente un nombre pair de pignons (9) sur le périmètre, le nombre de pignons (9) étant sélectionné à partir de 28, 30 et 32, et/ou dans lequel le petit plateau de pédalier (2) comprend quatre desdites saillies axiales (11) avec quatre desdites projections axiales (12) respectives situées autour des premières ouvertures de montage (7) respectives, et/ou
dans lequel le grand plateau de pédalier (3) présente un nombre pair de pignons (10) sur le périmètre, le nombre de pignons (10) étant sélectionné à partir de 44, 46 et 48, et/ou dans lequel le grand plateau de pédalier (3) comprend quatre desdits creux axiaux (15) situés autour des deuxièmes ouvertures de montage (8) respectives.

9. Plateau de pédalier double (1) selon l'une ou plusieurs des revendications précédentes, dans lequel les saillies axiales (11) et les projections axiales (12) présentent un périmètre incurvé (13, 14) respectif sur le côté face au centre du petit plateau de pédalier (2), dans lequel de préférence le périmètre incurvé (13, 14) définit un demi-cercle.

10. Plateau de pédalier double (1) selon l'une ou plusieurs des revendications 1 à 4, dans lequel le petit plateau de pédalier (2) comprend quatre desdites saillies axiales (11) avec quatre desdites projections axiales (12) respectives situées autour des premières ouvertures de montage (7) respectives et dans lequel le grand plateau de pédalier (3) comprend quatre desdits creux axiaux (15) situés autour des deuxièmes ouvertures de montage (8) respectives, dans lequel deux des creux axiaux (15) situés à des extrémités diamétralement opposées du grand plateau de pédalier (3) comprennent une extension axiale (16) respective, et dans lequel de préférence le petit plateau de pédalier (2) est de forme ovale, les premières ouvertures de montage (7) sur le diamètre plus petit du petit plateau de pédalier (2) de forme ovale étant plus petites en diamètre que les premières ouvertures de montage (7) sur le diamètre plus grand du petit plateau de pédalier (2) de forme ovale.
